# EUROPÄISCHE PATENTANMELDUNG

(11) **EP 3 009 624 A1**
(43) Veröffentlichungstag der Anmeldung: **20.04.2016**
(21) Anmeldenummer: 15187895.6
(22) Anmeldetag: 01.10.2015
(51) Int. Cl.: F01P 5/04

(54) **VERFAHREN ZUR KOMBINIERTEN VORERWÄRMUNG UND KÜHLUNG EINES KÜHLMITTELS**

(30) Priorität: 13.10.2014 DE 102014220692
(71) Anmelder: Deere & Company, Moline, IL 61265 (US)
(72) Erfinder: Jurzok, Corinna, 67655 Kaiserslautern (DE); Berg, Alexander, 68199 Mannheim (DE)
(74) Vertreter: Dehnhardt, Florian Christopher

(57) **Zusammenfassung**

Die Erfindung betrifft ein Verfahren zur Kühlung eines Kühlmittels für die Abwärmekühlung eines Verbrennungsmotors in einem landwirtschaftlichen Arbeitsfahrzeug, wobei ein von dem Kühlmittel durchflossener Wärmetauscher und Luftfördermittel zur Erzeugung eines Luftstroms durch den Wärmetauscher vorgesehen sind.

## Beschreibung

Die Erfindung betrifft ein Verfahren zur Kühlung eines Kühlmittels für die Abwärmekühlung eines Verbrennungsmotors in einem landwirtschaftlichen Arbeitsfahrzeug, wobei ein von dem Kühlmittel durchflossener Wärmetauscher und Luftfördermittel zur Erzeugung eines Luftstroms durch den Wärmetauscher vorgesehen sind.

Fluidbasierte Kühlsysteme für die Abwärmekühlung eines Verbrennungsmotors sind in der Regel derart konzipiert, dass der Kühlkreislauf über einen Kühlmittelthermostat in einer Nebenkühlkreislauf, auch Kurzschlusskreislauf genannt, und einen Hauptkühlkreis unterteilt ist. Prinzipiell befindet sich der Kühlmittelthermostat während der Warmlaufphase in eine Stellung, in der der Durchfluss des Kühlmittels durch den in dem Hauptkühlkreis befindlichen Wärmetauscher, auch Motorkühler genannt, gesperrt ist und ein Durchfluss des Kühlmittels durch eine den Wärmetauscher kurzschließende Kühlmittelleitung freigegeben ist. Die damit einhergehende Reduzierung des umgewälzten Kühlmittels führt zu einem schnelleren Durchlaufen der Warmlaufphase und Erreichen der Betriebstemperatur des Verbrennungsmotors. In den Bereich der sogenannten Schalttemperatur des Kühlmittelthermostats wird die kurzschließende Kühlmittelleitung in dem Maße verschlossen, in dem der Durchfluss durch den Wärmetauscher geöffnet wird. Hierbei wird also noch nicht erwärmtes Kühlmittels in den Kühlmittelkreislauf miteinbezogen und muss auf die höhere Temperatur erwärmt werden. Hierbei kommt es somit zu einem kurzfristig Temperaturabfall in dem Kühlmittelkreislauf. Weiterhin ist die Warmlaufphase durchaus von einer gewissen Dauer, während relativ unmittelbar nach dem Kaltstart die Temperatur in dem Motorraum, in dem der Verbrennungsmotor einsitzt, die Umgebungstemperatur übersteigt.

Die Aufgabe der vorliegenden Erfindung besteht darin, ein Kühlsystem dahingehend zu verbessern, dass eine weiter verkürzte Warmlaufphase des Verbrennungsmotors erreicht wird.

Die Aufgabe wird gelöst durch ein Verfahren zur kombinierten Vorerwärmung und Kühlung eines Kühlmittels für die Abwärmekühlung eines Verbrennungsmotors in einem landwirtschaftlichen Arbeitsfahrzeug, wobei ein von dem Kühlmittel durchflossener Wärmetauscher und Luftfördermittel zur Erzeugung eines Luftstroms durch den Wärmetauscher vorgesehen sind und die Luftfördermittel derart ausgelegt sind, den Luftstrom bedarfsweise in einer Richtung auf den Verbrennungsmotor zu oder in einer Richtung weg von dem Verbrennungsmotor zu erzeugen, bei dem die Luftfördermittel zur Erzeugung des Luftstroms in Richtung weg von dem Verbrennungsmotor angesteuert werden, solange ein einen Temperaturzustand des Verbrennungsmotors charakterisierender Temperaturwert einen Schwellenwert unterschreiten und die Luftfördermittel bei Überschreiten des Zustandswerts reversiert angesteuert werden.

Das erfindungsgemäße Verfahren ist in vorteilhafterweise dazu geeignet, die Temperaturdifferenz auszunutzen, die nach einem Kaltstart des Verbrennungsmotors während der Warmlaufphase zwischen der Umgebungstemperatur und der Motorraumtemperatur entstehen kann. Da in der Regel im Moment des Kaltstarts das Kühlmittel in dem Wärmetauscher sich auf dem Niveau der Umgebungstemperatur befindet, stellt sich während der Warmlaufphase eine Temperaturdifferenz zwischen dem Kühlmittel in dem Wärmetauscher und dem Motorraum ein. Durch das erfindungsgemäße Verfahren wird zunächst erreicht, dass es bei Erreichen der Schalttemperatur des Kühlmittelthermostats, das heißt bei Öffnen des Durchflusses durch den Wärmetaucher beziehungsweise den Hauptkühlkreis, zu keinem oder zumindest zu einem reduzierten kurzfristigen Temperaturabfall in dem Kühlmittelkreislauf kommt. Weiterhin kann durch das erfindungsgemäße Verfahren erreicht werden, dass die Dauer der Warmlaufphase verkürzt wird, da ein zusätzlicher Wärmeeintrag in den Kühlmittelkreis während der Warmlaufphase stattfindet. Entscheidend ist, dass dieser Wärmeeintrag von einer Wärmequelle stammt, beispielsweise dem Abgaskrümmer, dessen abgegebene Wärme regelmäßig keinem anderen Verwendungszweck zugeführt wird. Insofern steigt der Wirkungsgrad des Verbrennungsmotors während der Warmlaufphase.

Bevorzugt liegt der Schwellenwert in der Höhe der Betriebstemperatur des Verbrennungsmotors. Hierdurch wird sichergestellt, dass möglichst die gesamte Warmlaufphase dafür genutzt wird, den Wärmetauscher mit der bereit im Motorraum erwärmten Luft zu durchströmen.

Bevorzugt handelt es sich bei den Luftfördermitteln um einen elektrisch oder hydraulisch angetriebenen Ventilator. Ein solcher ist einfach in einem Kühlsystem darzustellen.

Die vorliegende Erfindung wird anhand der nachfolgenden Figuren beschrieben. Hierin zeigen
- Figur 1: ein landwirtschaftliches Arbeitsfahrzeug mit einen Kühlsystem angesteuert nach dem Stand der Technik und
- Figur 2: ein landwirtschaftliches Arbeitsfahrzeug (Ausschnitt) mit einen Kühlsystem angesteuert gemäß der Erfindung.

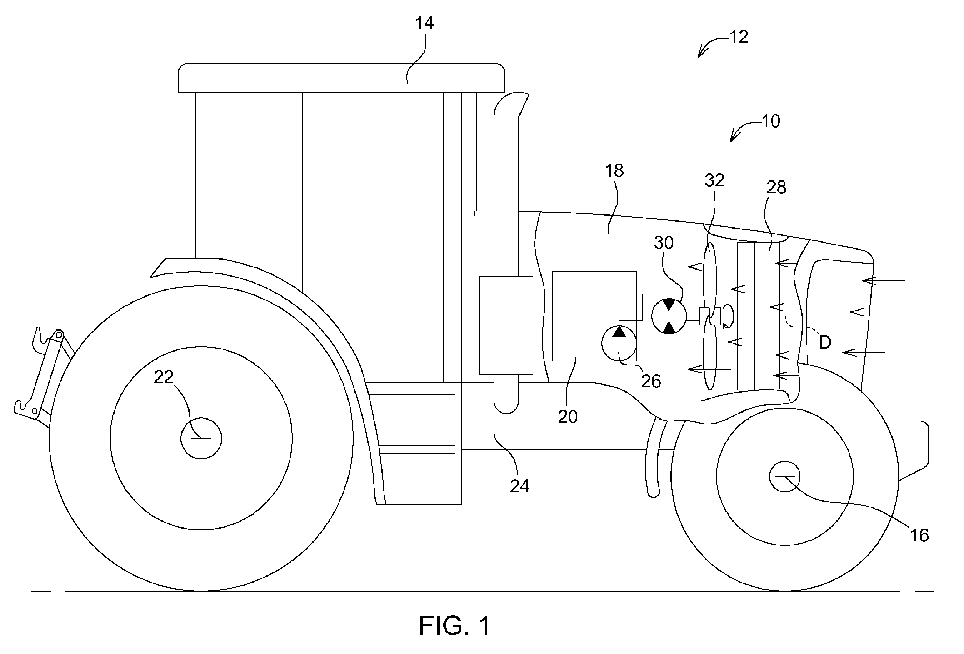

Die Figur 1 zeigt ein in Teilen nur schematisch dargestelltes landwirtschaftliches Arbeitsfahrzeug 12 mit einem in einem vorderen Bereich angeordneten Kühlsystem 10 zur Abwärmekühlung eines Verbrennungsmotors 20, der in einem Motorraum 18 einsitzt. Das landwirtschaftliche Arbeitsfahrzeug 12 umfasst ferner eine Kabine 14, eine Vorderachse 16 und eine durch den Verbrennungsmotor 20 angetriebene Hinterachse 22. Ein Rahmen 24 dient als tragendes Element der einzelnen Komponenten des Arbeitsfahrzeugs 12.

Zum Abführen der während des Betriebs des Verbrennungsmotors 20 entwickelten Wärme umfasst das Kühlsystem 10 einen kühlmitteldurchströmten und mit einem Luftstrom zu beaufschlagenden Wärmetauscher 28 und den Luftstrom erzeugende Luftfördermittel 32 in Form eines Ventilators. Sowohl der Wärmetauscher 28 als auch der Ventilator 32 können in Fahrtrichtung der Arbeitsmaschine 12 vor dem Verbrennungsmotor 20 angeordnet sein. Außerdem kann der Ventilator 32 zwischen dem Verbrennungsmotor 20 und dem Wärmetauscher 32 angeordnet sein.

In dem vorliegend beschriebenen und gezeigten Ausführungsbeispiel kann der Ventilator 32 von einem Hydraulikmotor 30 um eine Drehachse D angetrieben werden, der seinerseits von einer durch den Verbrennungsmotor 20 angetriebenen Hydraulikpumpe 26 gespeist werden kann. Erfindungsgemäß ist vorgesehen ist, dass der Ventilator 32 von dem Hydraulikmotor 30 bedarfsweise sowohl in der einen Rotationrichtung als auch in der entgegengesetzten Rotationrichtung angetrieben werden kann. In der Figur 1 ist der durch den Ventilator 32 erzeugte Luftstrom durch Pfeile dargestellt, die eine Strömungsrichtung des Luftstroms aus der Umgebung, durch den Wärmetauscher 28 hindurch und in den Motorraum 18 repräsentieren sollen. Der Ventilator 32 wird somit in der Rotationsrichtung angesteuert und angetrieben, in der, zumindest bei betriebswarmem Verbrennungsmotor 20, ein als Kühlluftstrom wirksamer Luftstrom aus der Umgebung in den Motorraum 18 erzeugt wird.

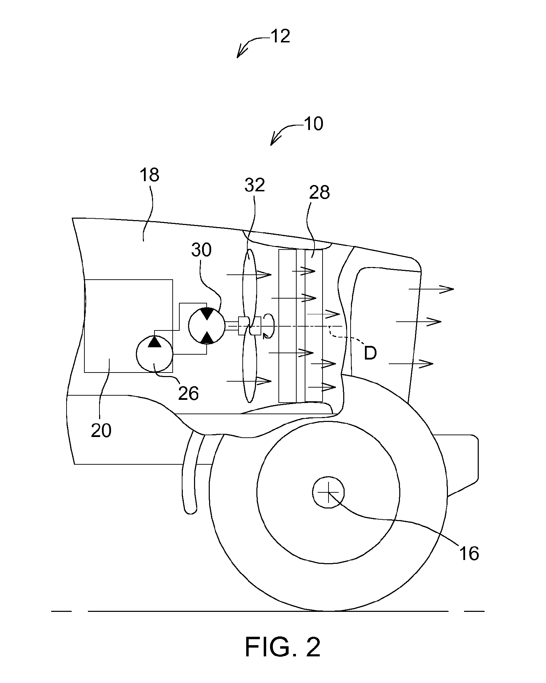

In der Figur 2 ist der Ventilator 32 in der entgegengesetzten Rotationsrichtung angesteuert und angetrieben, so dass ein Luftstrom aus dem Motorraum 18, durch den Wärmetauscher 28 und in die Umgebung erzeugt wird. In dieser vorliegend als entgegengesetzt bezeichneten Rotationsrichtung wird der Ventilator 32 erfindungsgemäß unmittelbar nach dem Kaltstart und während der darauffolgenden Warmlaufphase des Verbrennungsmotors 20 angesteuert. Der Begriff Kaltstart wird im Kontext dieser Anmeldung als ein Zustand definiert, in dem ein Temperaturniveau des Verbrennungsmotors 20, welches beispielsweise durch die Kühlmitteltemperatur oder die Motoröltemperatur repräsentiert wird, deutlich unterhalb der Betriebstemperatur des Verbrennungsmotors 20 liegt, wobei die Betriebstemperatur regelmäßig durch eine Kühlmitteltemperatur zwischen 80°C und 100°C oder eine Motoröltemperatur zwischen 90°C und 110°C charakterisiert wird.

Für die Durchführung des erfindungsgemäßen Verfahrens wird zunächst über den auf der landwirtschaftlichen Arbeitsmaschine 12 vorhandenen Außentemperatursensor, Kühlmitteltemperatursensor und Motoröltemperatursensor detektiert, ob ein Kaltstartzustand vorliegt. Liegt ein Kaltstartzustand vor, wird nach dem erfolgten Kaltstart des Verbrennungsmotors 20 der Ventilator 32 in der entgegengesetzten Rotationsrichtung angesteuert und angetrieben, so dass ein Luftstrom aus dem Motorraum 18, durch den Wärmetauscher 28 und in die Umgebung erzeugt wird. Da nach einem Kaltstart des Verbrennungsmotors 20 der Auspuffkrümmer schnell heiß wird, heizt dieser den Motorraum 18 schnell gegenüber der Umgebungstemperatur auf. Diese erhöhte Temperatur wird bei Durchführung des erfindungsgemäßen Verfahrens genutzt, um das in dem Wärmetauscher 28 befindliche Kühlmittel zu erwärmen, bevor der Kühlmittelthermostat seine Schalttemperatur erreicht hat und den Durchfluss durch den Hauptkühlkreis freigegeben hat. Hat der Verbrennungsmotor 20 seine Betriebstemperatur erreicht, wird die Rotationsrichtung des Ventilators reversiert und in der Rotationsrichtung angesteuert und angetrieben, in der ein als Kühlluftstrom wirksamer Luftstrom aus der Umgebung in den Motorraum 18 erzeugt wird.

### Bezugszeichenliste

- 10: Kühlsystem
- 12: landwirtschaftliches Arbeitsfahrzeug
- 14: Kabine
- 16: Vorderachse
- 18: Motorraum
- 20: Verbrennungsmotor
- 22: Hinterachse
- 24: Rahmen
- 26: Hydraulikpumpe
- 28: Wärmetauscher
- 30: Hydraulikmotor
- 32: Ventilator

## Patentansprüche

1. Verfahren zur kombinierten Vorerwärmung und Kühlung eines Kühlmittels für die Abwärmekühlung eines Verbrennungsmotors in einem landwirtschaftlichen Arbeitsfahrzeug,
wobei ein von dem Kühlmittel durchflossener Wärmetauscher und Luftfördermittel zur Erzeugung eines Luftstroms durch den Wärmetauscher vorgesehen sind und die Luftfördermittel derart ausgelegt sind, den Luftstrom bedarfsweise in einer Richtung auf den Verbrennungsmotor zu oder in einer Richtung weg von dem Verbrennungsmotor zu erzeugen,
bei dem die Luftfördermittel zur Erzeugung des Luftstroms in Richtung weg von dem Verbrennungsmotor angesteuert werden, solange ein einen Temperaturzustand des Verbrennungsmotors charakterisierender Temperaturwert einen Schwellenwert unterschreiten und die Luftfördermittel bei Überschreiten des Zustandswerts reversiert angesteuert werden.

2. Verfahren zur kombinierten Vorerwärmung und Kühlung eines Kühlmittels nach Anspruch 1, **dadurch gekennzeichnet, dass** der Schwellenwert in der Höhe der Betriebstemperatur des Verbrennungsmotors liegt.

3. Verfahren zur kombinierten Vorerwärmung und Kühlung eines Kühlmittels nach Anspruch 1 oder 2, **dadurch gekennzeichnet, dass** es sich bei den Luftfördermitteln um einen elektrisch oder hydraulisch angetriebenen Ventilator handelt.
